# EUROPEAN PATENT APPLICATION

(11) **EP 4 024 218 A1**
(43) Date of publication of application: **06.07.2022**
(21) Application number: 21217784.4
(22) Date of filing: 27.12.2021
(51) Int. Cl.: G06F 11/36

(54) **MOBILE TERMINAL H5 PAGE APPLICATOIN TEST DEVICE AND TEST METHOD, AND COMPUTER TERMINAL**

(30) Priority: 30.12.2020 CN 202011619105
(71) Applicant: Shenzhen Sekorm Component Network Co., Ltd, Shenzhen, Guangdong (CN)
(72) Inventor: BAO, Jiantao, Shenzhen (CN)
(74) Representative: Westphal, Mussgnug & Partner, Patentanwälte mbB

(57) **Abstract**

The present invention relates to a mobile terminal H5 page application test device and test method, and a computer terminal. Automated test scripts of the test device drive a browser by means of a browser driver; the browser is installed in a computer terminal; the automated test scripts include a browser driver interfacing script for H5 page content exhibition and triggering H5 control events corresponding to the H5 page application of the mobile terminal and a browser driver interfacing script setting up an execution sequence of the H5 page content exhibition and the triggering H5 control events; and after execution of the automated test scripts, the browser driver drives the browser to interact with a backstage server according to the execution sequence of the H5 page content exhibition and the triggering H5 control events, in order to display the H5 page content exhibition and execute the triggering H5 control events. The present invention completes a test of a mobile terminal H5 page application in a computer terminal, so as to enhance the test efficiency and reduce the expenditure of cost for purchasing hardware equipment of mobile terminals.

## Description

### FIELD OF THE INVENTION

The present invention relates to the field of H5 page application testing, and more particularly to a mobile terminal H5 page application test device and test method, and a computer terminal.

### DESCRIPTION OF THE RELATED ART

With the continuous development of the information era, applications in which people use mobile devices are getting more and more, and the amount of applications that use H5 (HyperText Markup Language 5, HTML5) pages in the mobile terminals are getting increased. In known techniques, function tests for newly developed H5 page applications for mobile devices are all carried out in mobile devices, and this requires purchase of the mobile devices and would take a lot of expenditure for a user, and also brings many troubles to users who do not have mobile devices. The known techniques do not offer a method that is excellent and does not require mobile devices for carrying out function tests for H5 page applications of terminal devices.

### SUMMARY OF THE INVENTION

The technical issue that the present invention aims to resolve is to provide, in view of the above-described deficiency of the prior art, a mobile terminal H5 page application test device and test method, and a computer terminal.

The technical solution that the present invention adopts to resolve the technical issue is to construct a mobile terminal H5 page application test device, and the test device is applicable to a computer terminal; the test device comprises a browser, automated test scripts, and a browser driver, the automated test scripts driving the browser by means of the browser driver;
the browser being installed in the computer terminal;
the automated test scripts comprising a browser driver interfacing script for H5 page content exhibition and triggering H5 control events corresponding to the H5 page application of the mobile terminal and a browser driver interfacing script setting up an execution sequence of the H5 page content exhibition and the triggering H5 control events; and
after execution of the automated test scripts, the browser driver driving the browser to interact with a backstage server according to the execution sequence of the H5 page content exhibition and the triggering H5 control events, in order to display the H5 page content exhibition and execute the triggering H5 control events.

Further, in the mobile terminal H5 page application test device according to the present invention, a result of each step of operation of the browser is saved in a storage of the computer terminal.

Further, in the mobile terminal H5 page application test device according to the present invention, parameters of the browser are configured to match with the H5 page application of the mobile terminal.

Further, in the mobile terminal H5 page application test device according to the present invention, the H5 page content exhibition includes an H5 page address.

Further, the present invention also provides a mobile terminal H5 page application test method, which comprises:
S1, installing a browser and a browser driver in a computer terminal and setting up automated test scripts, the automated test scripts comprising a browser driver interfacing script for H5 page content exhibition and triggering H5 control events corresponding to the H5 page application of the mobile terminal and a browser driver interfacing script setting up an execution sequence of the H5 page content exhibition and the triggering H5 control events;
S2, executing the automated test scripts in the computer terminal to transmit the H5 page content exhibition and the triggering H5 control events to the browser driver according to the execution sequence; and
S3, the browser driver driving the browser to interact with a backstage server according to the execution sequence of the H5 page content exhibition and the triggering H5 control events for displaying the H5 page content exhibition and executing the triggering H5 control events.

Further, the mobile terminal H5 page application test method according to the present invention further comprises, after Step S3:
S4, saving a result of each step of operation of the browser in a storage of the computer terminal.

Further, in the mobile terminal H5 page application test method according to the present invention, in Step S1, installing a browser and a browser driver in a computer terminal comprises:
installing the browser in the computer terminal, acquiring and installing the browser driver of the browser, and configuring parameters of the browser to match with the H5 page application of the mobile terminal.

Further, in the mobile terminal H5 page application test method according to the present invention, the H5 page content exhibition includes an H5 page address, and in Step S3, displaying the H5 page content exhibition comprises:
the browser visiting the backstage server according to the H5 page address, and retrieving and displaying page contents corresponding to the H5 page address.

Further, in the mobile terminal H5 page application test method according to the present invention, the browser is based on a google browser engine or an IE browser engine.

Further, the present invention also provides a computer terminal, and the computer terminal comprises the mobile terminal H5 page application test device as described above; or
the computer terminal comprises a storage and a processor, the storage storing computer program, and the processor executing the computer program stored in the storage, in order to implement the mobile terminal H5 page application test method as described above.

Implementation of the mobile terminal H5 page application test device and test method, and a computer terminal according to the present invention provides the following beneficial effects. The present invention completes a test of a mobile terminal H5 page application in a computer terminal, so as to enhance the test efficiency and reduce the expenditure of cost for purchasing hardware equipment of mobile terminals.

### BRIEF DESCRIPTION OF THE DRAWINGS

A detailed description of the present invention will be provided below with reference to the attached drawings and embodiments, and in the drawings:
FIG. 1 is a block diagram showing a mobile terminal H5 page application test device provided in an embodiment;
FIG. 2 is a flow chart illustrating a mobile terminal H5 page application test method provided in an embodiment; and
FIG. 3 is a flow chart illustrating a mobile terminal H5 page application test method provided in an embodiment.

### DETAILED DESCRIPTION OF PREFERRED EMBODIMENTS OF THE INVENTION

For better understanding of the technical features, purposes, and efficacy of the present invention, embodiments of the present invention will be described in detail with reference to the drawings.

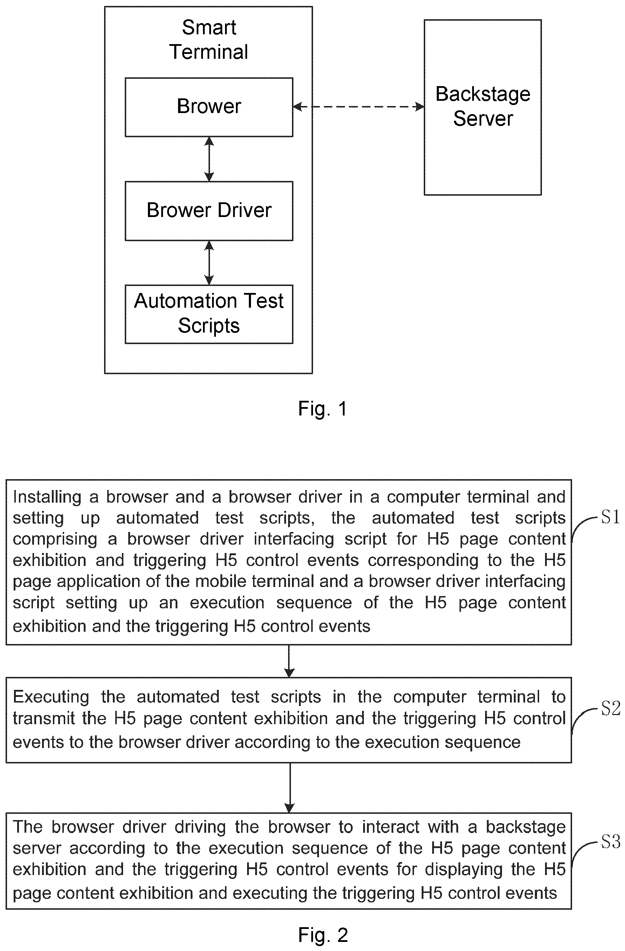

In a preferred embodiment, referring to FIG. 1, a mobile terminal H5 page application test device according to the instant embodiment is applicable to a computer terminal, wherein the mobile terminal includes, but not limited to, a smart mobile phone, a smart watch, a tablet computer, and a vehicle-carried computer, and the mobile terminal H5 page application is an H5 page application executable in the mobile terminal; the computer terminal is a desktop computer or a notebook computer. The test device comprises a browser, automated test scripts, and a browser driver, and the automated test scripts drive the browser by means of the browser driver. The browser is installed in the computer terminal, and optionally, the browser is based on a google browser engine or IE browser engine, such as google browser, 360 Safe browser, Tencent browser, and Sogou browser.

A test operator compiles and edits the automated test scripts according to each function-to-be-tested of the H5 page application of the mobile terminal. The automated test scripts comprise a browser driver interfacing script for H5 page content exhibition and triggering H5 control events corresponding to the H5 page application of the mobile terminal and a browser driver interfacing script setting up an execution sequence of the H5 page content exhibition and the triggering H5 control events. After execution of the automated test scripts, the browser driver drives the browser to interact with the backstage server according to the execution sequence of the H5 page content exhibition and the triggering H5 control events, in order to display the H5 page content exhibition and execute the triggering H5 control events.

The instant embodiment completes a test of a mobile terminal H5 page application in a computer terminal, so as to enhance the test efficiency and reduce the expenditure of cost for purchasing hardware equipment of mobile terminals.

In some embodiments, the above-described embodiment requires the test operator to stay around the computer to watch the test process, in order to find out problems incurring in the test process, and this way is quite labor-consuming. To realize fully automated testing, a result of each step of operation of the browser is saved in a storage of the computer terminal, and the test operator does not need to stay around the computer for watching, and may check the result of operation so stored after completion of the automated testing, so as to enhance the test efficiency and lower down human labor cost.

In some embodiments, if parameters of the browser are different from the H5 page application of the mobile terminal, the browser parameters must be modified according to parameters required by the H5 page application of the mobile terminal by configuring the parameters of the browser to match with the H5 page application of the mobile terminal, in order to achieve a better test performance.

In some embodiments, the H5 page content exhibition includes an H5 page address, namely an H5 network address. The automated test script transmits the H5 page address to the browser driver, and the browser driver drives the browser to visit the H5 page address of the backstage server, meaning the browser visits the backstage server according to the H5 page address, and retrieves and displays page contents corresponding to the H5 page address.

In a preferred embodiment, a computer terminal according to the instant embodiment comprises the mobile terminal H5 page application test device described in the above embodiment. Optionally, the computer terminal is a desktop computer or a notebook computer.

In a preferred embodiment, referring to FIG. 2, a mobile terminal H5 page application test method according to the instant embodiment comprises the following steps:
S1, installing a browser and a browser driver in a computer terminal and setting up automated test scripts, the automated test scripts comprising a browser driver interfacing script for H5 page content exhibition and triggering H5 control events corresponding to the H5 page application of the mobile terminal and a browser driver interfacing script setting up an execution sequence of the H5 page content exhibition and the triggering H5 control events.
   Specifically, the mobile terminal H5 page application test device is applicable to a computer terminal, wherein the mobile terminal comprises, but not limited to, a smart mobile phone, a smart watch, a tablet computer, and a vehicle-carried computer, and the mobile terminal H5 page application is an H5 page application executable in the mobile terminal; the computer terminal is a desktop computer or a notebook computer. The test device comprises a browser, automated test scripts, and a browser driver, and a test operator compiles and edits the automated test scripts according to each function-to-be-tested of the H5 page application of the mobile terminal. The automated test scripts comprises a browser driver interfacing script for H5 page content exhibition and triggering H5 control events corresponding to the H5 page application of the mobile terminal and a browser driver interfacing script setting up an execution sequence of the H5 page content exhibition and triggering H5 control events, and the automated test scripts drive the browser by means of the browser driver. The browser is installed in the computer terminal, and optionally, the browser is based on a google browser engine or IE browser engine, such as google browser, 360 Safe browser, Tencent browser, and Sogou browser. Optionally, if parameters of the browser are different from the H5 page application of the mobile terminal, the browser parameters must be modified according to parameters required by the H5 page application of the mobile terminal by configuring the parameters of the browser to match with the H5 page application of the mobile terminal, in order to achieve a better test performance.
S2, executing the automated test scripts in the computer terminal to transmit the H5 page content exhibition and the triggering H5 control events to the browser driver according to the execution sequence.
S3, the browser driver driving the browser to interact with a backstage server according to the execution sequence of the H5 page content exhibition and the triggering H5 control events for displaying the H5 page content exhibition and executing the triggering H5 control events.

The instant embodiment completes a test of a mobile terminal H5 page application in a computer terminal, so as to enhance the test efficiency and reduce the expenditure of cost for purchasing hardware equipment of mobile terminals.

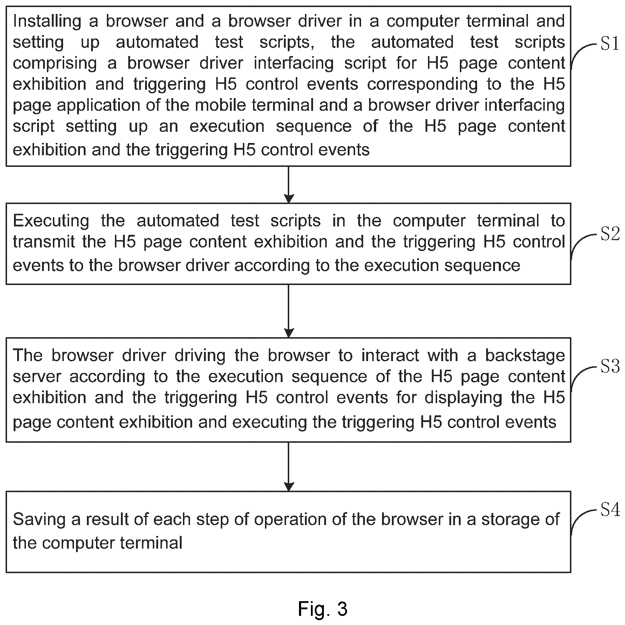

In some embodiments, referring to FIG. 3, after Step S3, the mobile terminal H5 page application test method further comprises: S4, saving a result of each step of operation of the browser in a storage of the computer terminal. Specifically, the above-described embodiment requires the test operator to stay around the computer to watch the test process, in order to find out problems incurring in the test process, and this way is quite labor-consuming. To realize fully automated testing, a result of each step of operation of the browser is saved in a storage of the computer terminal, and the test operator does not need to stay around the computer for watching, and may check the result of operation so stored after completion of the automated testing, so as to enhance the test efficiency and lower down human labor cost.

In some embodiments, in the mobile terminal H5 page application test method according to the instant embodiment, in Step S1, installing a browser and a browser driver in a computer terminal comprises: installing the browser in the computer terminal, acquiring and installing the browser driver of the browser, and configuring parameters of the browser to match with the H5 page application of the mobile terminal.

In some embodiments, in the mobile terminal H5 page application test method according to the instant embodiment, the H5 page content exhibition includes an H5 page address, and in Step S3, displaying the H5 page content exhibition comprises: the automated test scripts transmitting the H5 page address to the browser driver, and the browser driver drives the browser to visit the H5 page address of a backstage server, meaning the browser visits the backstage server according to the H5 page address, and retrieves and displays page contents corresponding to the H5 page address.

In a preferred embodiment, a computer terminal according to the instant embodiment comprises a storage and a processor. The storage stores computer program, and the processor executes the computer program stored in the storage, in order to implement the mobile terminal H5 page application test method described in the above embodiments.

A progressive way is adopted to illustrate various embodiments of the disclosure. The description of each embodiment focuses on key features that are different from those of other embodiments. Similar parts of the various embodiments may refer to each other. For the devices disclosed in the embodiments, since they are corresponding to the methods disclosed in the embodiments, and the descriptions thereof are relatively simplified, and the related parts may refer to the descriptions of the methods.

Skilled artisans may further notice that the units and method steps of each example of the embodiments disclosed in this disclosure can be implemented in hardware or computer software or a combination of the two. To clearly illustrate the exchangeability of hardware and software, the embodiments provided above demonstrate the components and steps of each example with a general description according to functions thereof. Whether such functions can be implemented with hardware or software is determined by the specific application and design requirement conditions of the technical solution. Skilled artisans may adopt different ways to implement the functions so described for each specific application, and such implementations should not be regarded as exceeding the scope of the present invention.

The steps of the method or algorithm described with reference to the embodiments disclosed in the disclosure can be implemented directly by means of hardware, or by means of software modules executable in a processor, or a combination of the two. The software modules may be loaded in a random access memory (RAM), an internal storage, a read only memory (ROM), an electrically programmable ROM, an electrically erasable ROM, a register, a hard disc drive, a mobile magnetic drive, a CD-ROM, or any other forms of storage medium known in the field.

The embodiments provided above are only for illustration of the technical thoughts and features of the present invention, for the purposes to help those skilled in the art to understand the contents of the present invention and to accordingly put into practice, and should not be construed as limiting to the scope of protection for the present invention. All variations and modifications that are considered equivalent to the scope of the appended claims of the application belong to the scope of the present invention as defined solely by the appended claims.

## Claims

1. A mobile terminal H5 page application test device, **characterized in that** the test device is applicable to a computer terminal; the test device comprises a browser, automated test scripts, and a browser driver, the automated test scripts driving the browser by means of the browser driver;
the browser being installed in the computer terminal;
the automated test scripts comprising a browser driver interfacing script for H5 page content exhibition and triggering H5 control events corresponding to the H5 page application of the mobile terminal and a browser driver interfacing script setting up an execution sequence of the H5 page content exhibition and the triggering H5 control events; and
after execution of the automated test scripts, the browser driver driving the browser to interact with a backstage server according to the execution sequence of the H5 page content exhibition and the triggering H5 control events, in order to display the H5 page content exhibition and execute the triggering H5 control events.

2. The mobile terminal H5 page application test device according to claim 1, **characterized in that** a result of each step of operation of the browser is saved in a storage of the computer terminal.

3. The mobile terminal H5 page application test device according to claim 1, **characterized in that** parameters of the browser are configured to match with the H5 page application of the mobile terminal.

4. The mobile terminal H5 page application test device according to claim 1, **characterized in that** the H5 page content exhibition includes an H5 page address.

5. A mobile terminal H5 page application test method, **characterized by** comprising:
S1, installing a browser and a browser driver in a computer terminal and setting up automated test scripts, the automated test scripts comprising a browser driver interfacing script for H5 page content exhibition and triggering H5 control events corresponding to the H5 page application of the mobile terminal and a browser driver interfacing script setting up an execution sequence of the H5 page content exhibition and the triggering H5 control events;
S2, executing the automated test scripts in the computer terminal to transmit the H5 page content exhibition and the triggering H5 control events to the browser driver according to the execution sequence; and
S3, the browser driver driving the browser to interact with a backstage server according to the execution sequence of the H5 page content exhibition and the triggering H5 control events for displaying the H5 page content exhibition and executing the triggering H5 control events.

6. The mobile terminal H5 page application test method according to claim 5, **characterized by** further comprising, after Step S3:
S4, saving a result of each step of operation of the browser in a storage of the computer terminal.

7. The mobile terminal H5 page application test method according to claim 5, **characterized in that** in Step S1, installing a browser and a browser driver in a computer terminal comprises:
installing the browser in the computer terminal, acquiring and installing the browser driver of the browser, and configuring parameters of the browser to match with the H5 page application of the mobile terminal.

8. The mobile terminal H5 page application test method according to claim 5, **characterized in that** the H5 page content exhibition includes an H5 page address, and in Step S3, displaying the H5 page content exhibition comprises:
the browser visiting the backstage server according to the H5 page address, and retrieving and displaying page contents corresponding to the H5 page address.

9. The mobile terminal H5 page application test method according to claim 5, **characterized in that** the browser is based on a google browser engine or an IE browser engine.

10. A computer terminal, **characterized in that** the computer terminal comprises the mobile terminal H5 page application test device according to any one of claims 1-4; or
the computer terminal comprises a storage and a processor, the storage storing computer program, and the processor executing the computer program stored in the storage, in order to implement the mobile terminal H5 page application test method according to any one of claims 5-9.
